# EUROPÄISCHE PATENTSCHRIFT

(11) **EP 1 745 222 B1**
(45) Veröffentlichungstag und Bekanntmachung des Hinweises auf die Patenterteilung: **18.07.2012**
(21) Anmeldenummer: 05716913.8
(22) Anmeldetag: 04.03.2005
(51) Int. Cl.: F16F 9/04

(54) **LUFTFEDER**
AIR SPRING
RESSORT PNEUMATIQUE

(30) Priorität: 03.05.2004 DE 102004021586
(43) Veröffentlichungstag der Anmeldung: 24.01.2007
(73) Patentinhaber: Continental Teves AG & Co. OHG, 60488 Frankfurt (DE)
(72) Erfinder: KRAUSS, Hans-Peter, 30826 Garbsen-Freilingen (DE)
(86) Internationale Anmeldenummer: PCT/EP2005/050972
(87) Internationale Veröffentlichungsnummer: WO 2005/108818

(56) Entgegenhaltungen:
- WO-A-02/070918
- DE-A1- 4 418 120
- US-A1- 2002 109 276

## Beschreibung

Die Erfindung betrifft eine Luftfeder mit einem ersten Luftfederraum, einem zweiten Luftfederraum und einem dritten Luftfederraum mit veränderlichen Volumina, wobei die Volumina des ersten und des dritten Luftfederraumes zu dem Volumina des zweiten Luftfederraumes entgegengesetzt vergrößert und verkleinert werden, und wobei der zweite und der dritte Luftfederraum von einem Trennkolben getrennt werden, in dem zwei Drosseln angeordnet sind, die ein begrenztes Überströmen von Luft aus dem dritten Luftfederraum in den zweiten Luftfederraum ermöglichen und umgekehrt.

Aus der DE 100 25 901 A1 ist ein Fahrrad mit einer mechanischen Verstelleinrichtung mit zumindest einer doppelt wirkenden Kolben-/Zylinderanordnung bekannt, bei der zwei entgegenwirkende Luftkammern über eine Verbindungsleitung miteinander gekoppelt sind. In dieser Verbindungsleitung ist ein Absperrventil angeordnet, das im geöffneten Zustand einen Druckausgleich zwischen den Luftkammern zulässt. Ist das Absperrventil geschlossen, wird eine Kolbenstange festgestellt, so dass ein verstellbares Fahrradteil, eine Hinterradschwinge oder eine Vorderradgabel, in einer gewünschten Position festgehalten wird.

Aus der US 6,581,948 B2 ist ein Stoßdämpfer bekannt, der ein Trägheitsventil aufweist, das in Abhängigkeit eines auf ihn ausgeübten Impulses einen veränderten Durchlassquerschnitt für eine Hydraulikflüssigkeit freigibt.

Aus der DE4418120A1 ist eine pneumatische Feder-Dämpfer-Einheit mit einem doppeltwirkenden pneumatischen Verdrängerorgan sowie zumindest zwei Verdrängerkammern, deren Gesamtvolumen sich je nach Hubrichtung des Verdrängers vergrößert oder verkleinert, bekannt, wobei sich die Volumen von zumindest zwei Verdrängerkammem gegensinnig ändern. Zwischen diesen beiden Verdrängerkammern sind ventilgesteuerte Überströmkanäle angeordnet, welche in Abhängigkeit von der Hubgeschwindigkeit oder dem Hubweg der Federhübe steuerbar ausgebildet sind. Ferner ist ein Luftfederraum vorhanden, welcher keine Verbindung zu den beiden Verdrängerkammern aufweist.

Die WO 02/070918A1 offenbart eine Gasfeder-Dämpfereinheit, bei der das obere Gummi-Metall-Stützlager auf der vom Federraum abgewandten Seite des Gummielementes mit einem Druckausgleichsraum versehen ist, der über einen Druckausgleichskanal mit dem Federraum verbunden ist. Der zusätzliche Druckausgleichsraum weist ein festes und nicht veränderliches Volumen auf. Der Federraum ist über einen in der Kolbenstange befindlichen axialen Kanal mit dem entfernter liegenden zweiten Dämpferraum verbunden.

Die US2002/0109276A1 beschreibt eine Federungseinrichtung mit zwei koaxial zueinander angeordneten Federelementen, die im Wesentlichen aus je einem Rollbalg und je einem Abrollkolben bestehen. Die beiden Rollfalten sind gegensinnig zueinander angeordnet und umschließen einen gemeinsamen Federraum. Es besteht die Möglichkeit, diesen Federraum über einen außen liegenden Verbindungskanal mit einer Drossel mit einem festen Druckspeicher zu verbinden.

Ausgehend von dem bekannten Stand der Technik liegt der Erfindung die Aufgabe zugrunde, eine Luftfeder bereitzustellen, die einfach an die Bedürfnisse der Nutzer angepasst werden kann.

Erfindungsgemäß wird diese Aufgabe durch die Merkmale des Anspruchs 1 gelöst.

Um eine maximale Dämpfung bereitstellen zu können, ist vorgesehen, dass die Drosseleinrichtung sperrbar ausgebildet ist, so dass keine Luft von dem einen Luftfederraum zu dem anderen Luftfederraum strömen kann. Bei einem Einsatz der Luftfeder an einem Fahrrad wird beispielsweise bei Bergauffahrt verhindert, dass das Federbein durch Kräfte, die durch den Pedaltritt ins Fahrwerk eingeleitet werden, übermäßig einfedert.

Um sich schnell auf verändernde Umgebungsbedingungen einstellen zu können, ist die Drosseleinrichtung mit einer Betätigungseinrichtung gekoppelt, die von außen leicht zugänglich an der Luftfeder angeordnet ist und über die die Durchlassmenge bzw. das Strömungsvolumen eingestellt werden kann. Die Betätigungseinrichtung kann beispielsweise als ein Drehrad oder ein Hebel ausgebildet sein, die in entsprechenden Stellungen einrastbar sind, so dass der gewünschte Strömungsquerschnitt für den Verbindungskanal eingestellt wird. Beispielsweise kann die Drosseleinrichtung in den Verbindungskanal hineingeschraubt werden, um den Strömungsquerschnitt zu verringern.

Eine Weiterbildung der Erfindung sieht vor, dass an der Betätigungseinrichtung Rastelemente angeordnet oder dieser zugeordnet sind, die die Drosseleinrichtung in vorbestimmten Stellungen festlegen, so dass stufenweise die Federungs- und Dämpfungseigenschaften verändert werden.

In einer Ausführungsform der Erfindung ist es vorgesehen, dass die Rastelemente an zueinander verdrehbaren Kulissenscheiben ausgebildet sind und eine der Kulissenscheiben dem Verbindungskanal zugeordnet ist. Diese Kulissenscheibe wird durch die komprimierte Luft bei einer Bewegung der Luftfeder mit einer Kraft auf die zweite Kulissenscheibe hin belastet, so dass die in der Luftfeder befindliche Luft als eine Feder wirkt, die die Kulissenscheiben aufeinander drücken. An den Kulissenscheiben selber sind die Rastelemente, beispielsweise Verzahnungen, ausgebildet. Um die Drosseleinrichtung zu betätigen, müssen die Kulissenscheiben voneinander getrennt werden, indem ein Druck auf eine Kulissenscheibe entgegen dem Luftdruck ausgeübt wird. Nach Lösen der Betätigungseinrichtung rasten die Kulissenscheiben ineinander ein und legen den Strömungsquerschnitt des Verbindungskanals fest.

Vorteilhafterweise ist in der Drosseleinrichtung zumindest eine Durchlassbohrung ausgebildet, die in den Verbindungskanal ein- bzw. herausführbar ist. Durch Verdrehen der Drosseleinrichtung ist es somit möglich, verschieden große Anteile der Durchlassbohrung mit dem Verbindungskanal in Deckung zu bringen, so dass durch einfaches Verdrehen der Durchlassbohrung eine Anpassung des Durchlassquerschnittes möglich ist.

Alternativ zu einer nahezu stufenlosen Verdrehung ist es vorgesehen, dass mehrere Durchlassbohrungen vorgesehen sind, die vorzugsweise unterschiedliche Bohrungsdurchmesser aufweisen, so dass durch eine entsprechende Auswahl derjenigen Durchlassbohrung, die mit dem Verbindungskanal in Verbindung steht, die Federung - und Dämpfungseigenschaften der Luftfeder verändert werden können.

Als eine Variante der Erfindung ist statt einer Ausbildung der Drosseleinrichtung als fluchtende Bohrungen die Drosseleinrichtung als ein Nadelventil, insbesondere als ein stufenlos einstellbares Nadelventil, ausgebildet.

Eine vorteilhafte Ausgestaltung der Luftfeder sieht vor, dass in dem ersten Luftfederraum eine verschiebliche Kolbenstange angeordnet ist, die in dem zweiten Luftfederraum hinein ragt und einen Trennkolben aufweist, der an demjenigen Ende der Kolbenstange angeordnet ist, die dem zweiten Luftfederraum zugeordnet ist. Der Trennkolben bildet einen Abschluss des zweiten Luftfederraumes, und die Drosseleinrichtung ist in der Kolbenstange angeordnet, ebenso wie der Verbindungskanal zwischen den Luftfederräumen. Auf diese Weise wird eine kompakte Ausgestaltung der Luftfeder erreicht.

In einer Variante der Erfindung ist ein dritter Luftfederraum vorgesehen, der entsprechend zu dem ersten Luftfederraum vergrößert oder verkleinert wird, also gleichwirkend zu dem ersten Luftfederraum arbeitet. Zwischen dem dritten Luftfederraum und dem ersten Luftfederraum ist ebenfalls ein Verbindungskanal vorgesehen, der gleichzeitig auch als Verbindungskanal zwischen dem ersten und dem zweiten Luftfederraum dienen kann, wobei die Drosseleinrichtung in einer Verbindung zwischen dem ersten Luftfederraum und dem dritten Luftfederraum angeordnet ist und somit eine Strömungsverbindung zwischen dem ersten und dem dritten Luftfederraum herstellen und angepasst verändern kann. Nachfolgend werden Ausführungsbeispiele der Erfindung anhand der beigefügten Figuren näher erläutert werden. Es zeigen:
- Figur 1 -: eine Querschnittsansicht eines Teiles einer ersten Ausführungsform einer Luftfeder;
- Figur 2 -: eine Querschnittsansicht einer zweiten Ausführungsform der erfindungsgemäßen Luftfeder; sowie
- Figuren 2a, 2b, 2c, 2d -: verschiedene Schaltstellungen einer Drosseleinrichtung.

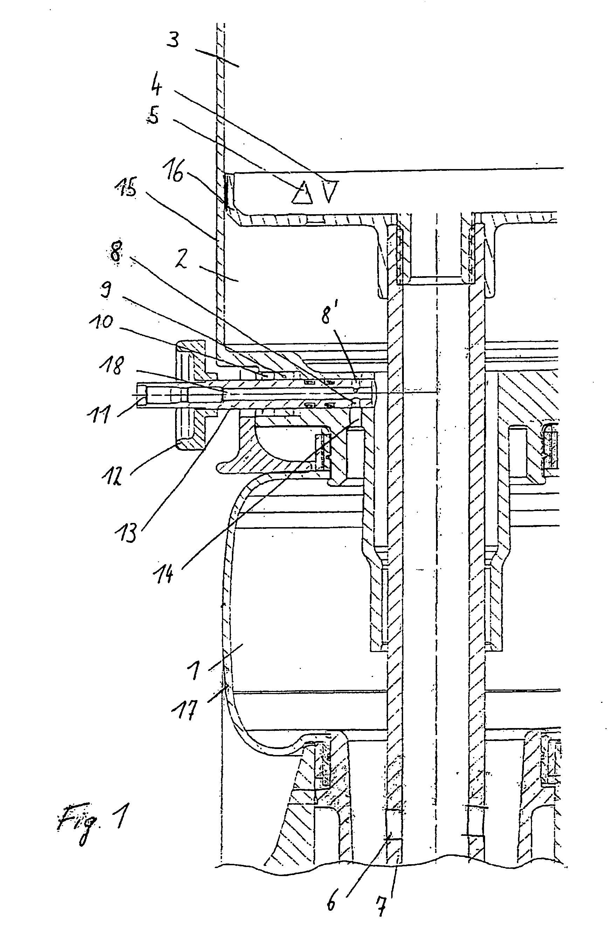

In der Figur 1 ist in einer Querschnittsansicht eine Luftfeder teilweise dargestellt, die drei Luftfederräume 1, 2, 3 aufweist. Der erste Luftfederraum 1 wird durch einen Rollbalg 17 gebildet, der an seinen Endseiten abdichtend festgelegt ist. Der zweite Luftfederraum 2 und der dritte Luftfederraum 3 sind in einem Gehäuse 15 gebildet, das von einem Trennkolben 16 unterteilt ist. Der Trennkolben 16 ist an einer verschieblich gelagerten Kolbenstange 7 angeordnet. Wird die Kolbenstange 7 beim Einfedern der Luftfeder in Richtung auf den dritten Luftfederraum 3 verschoben, verkleinern sich der erste Luftfederraum 1 und der dritte Luftfederraum 3, während der zweite Luftfederraum 2 vergrößert wird. Dementsprechend wird die in den Luftfederräumen 1, 2, 3 enthaltene Luft oder das darin vorhandene Gas komprimiert bzw. dekomprimiert.

In dem Trennkolben 16 sind zwei Drosseln 4, 5 angeordnet, die ein begrenztes Überströmen von Luft aus dem dritten Luftfederraum 3 im Falle einer Komprimierung der Luft in diesem Luftfederraum in den Luftfederraum 2 ermöglicht und umgekehrt. Beim Ausfedern bewegt sich der Trennkolben 16 und die Kolbenstange in der figürlichen Darstellung nach unten, so dass der zweite Luftfederraum 2 verkleinert und die darin befindliche Luft komprimiert wird. Über die Drossel 5 wird ein begrenztes Überströmen von Luft aus dem Luftfederraum 2 in den Luftfederraum 3 ermöglicht. Aufgrund der offenen Verbindung zwischen dem Luftfederraum 3 durch die hohle Kolbenstange, den offenen Trennkolben 16 sowie eine in der Kolbenstange 7 angeordnete Bohrung 6 ist ein Überströmen von Luft aus dem dritten Luftfederraum 3 in den ersten Luftfederraum 1 möglich. Die in dem Trennkolben 16 angeordneten Drosseln 4, 5 sind hinsichtlich ihrer Durchlassquerschnitte fest eingestellt und von außen in der Regel nicht zugänglich, ohne dass die komplette Luftfeder demontiert und zerlegt wird.

Um eine manuelle oder motorisch, insbesondere elektromotorisch aktuierbare Verstellmöglichkeit für eine Gasfeder-Dämpfereinheit bereitzustellen, damit die Federungs- und Dämpfungseigenschaften an die jeweiligen Umweltbedingungen oder Nutzerbedürfnisse angepaßt werden können, ist eine Drosseleinrichtung 13 vorgesehen, die in einem Verbindungskanal 14 zwischen dem zweiten Luftfederraum 2 und dem ersten Luftfederraum 1 angeordnet ist. In dem dargestellten Ausführungsbeispiel besteht die Drosseleinrichtung 13 aus einem Drosselbolzen, in dem mehrere Durchlassbohrungen 8, 8' angeordnet sind, die von einer Zentralbohrung 18 radial abzweigen. Der Drosselbolzen 13 ist drehbar in einem Teil des Gehäuses 15 gelagert, an dem auch der Rollbalg 17 befestigt ist. Der Drosselbolzen 13 ist seitlich aus dem Gehäuse 15 herausgeführt und an dem herausgeführten Ende mit einer Betätigungseinrichtung 12 in Gestalt eines Handrades oder eines Knopfes versehen. Über diese Betätigungseinrichtung 12 kann der Drosselbolzen 13 gedreht werden, so dass verschiedene Bohrungen 8, 8' fluchtend zu dem Verbindungskanal 14, der als Bohrung ausgebildet ist, ausgerichtet werden können. Neben einer stufenweisen Veränderung des Durchlassquerschnittes durch Ausrichtung der Bohrungen 8, 8' mit unterschiedlichen Bohrungsdurchmessern ist es möglich, die Bohrungen 8, 8' sich nur teilweise mit dem Verbindungskanal 14 überdecken zu lassen, so dass eine kontinuierliche Veränderung des Durchlassquerschnittes durch Veränderung des Überschneidungswinkels der Bohrungen 8, 8' mit dem Verbindungskanal 14 verwirklicht werden kann.

In dem Drosselbolzen 13 ist ein Druckanschluss 11 vorgesehen, über den die Luftfeder mit Druckluft versorgt werden kann, um das Druckniveau insgesamt zu erhöhen.

Die Drosseleinrichtung 13 bildet somit eine Bypassdrossel, die zwischen dem ersten Luftfederraum 1 und dem zweiten Luftfederraum 2 angeordnet ist. Durch die Verdrehung der Drosseleinrichtung 13 können verschiedene Durchmesser von Drosselbohrungen 8, 8' zur Deckung mit dem Verbindungskanal 14 gebracht werden, um die Durchlassquerschnitte an die Bedürfnisse der Gasfedemutzer anzupassen. Ebenfalls ist es möglich, durch Verdrehen des Drosselbolzens 13 den Verbindungskanal 14 vollständig zu verschließen, um eine höhere Dämpfung aufgrund des gesperrten Bypasses zwischen dem ersten Luftfederraum 1 und dem zweiten Luftfederraum 2 zu bewirken. Ein Überströmen der komprimierten Luft aus dem Luftfederraum 2 in den Luftfederraum 1 ist dann nurmehr über die Drossel 5, der hohlen Kolbenstange 7 und die Bohrung 6 möglich.

Um ein genaues Einstellen des Verdrehwinkels der Drosseleinrichtung 13 zu ermöglichen, sind zwei Kulissenscheiben 9 und 10 vorgesehen, wobei eine innere Kulissenscheibe 9 verdrehsicher mit dem Drosselbolzen 13 verbunden ist. Eine äußere Kulissenscheibe 10 ist verdrehsicher mit dem Gehäuse 15 verbunden, und die Kulisse sorgt dafür, dass der Drosselbolzen 13 zum Verdrehen entgegen dem in der Luftfeder vorhandenen Luftdruck, der als Feder wirkt, axial nach innen gedrückt werden muss. In den Kulissenscheiben 9, 10 sind Formschlusselemente ausgebildet, die nur bei vorgegebenen Winkelstellungen des Drosselbolzens 13 einrasten, vorzugsweise wenn die Bohrungen 8, 8' mit dem Verbindungskanal 14 zur Deckung gelangen, bzw. wenn der Verbindungskanal 14 vollständig verschlossen ist.

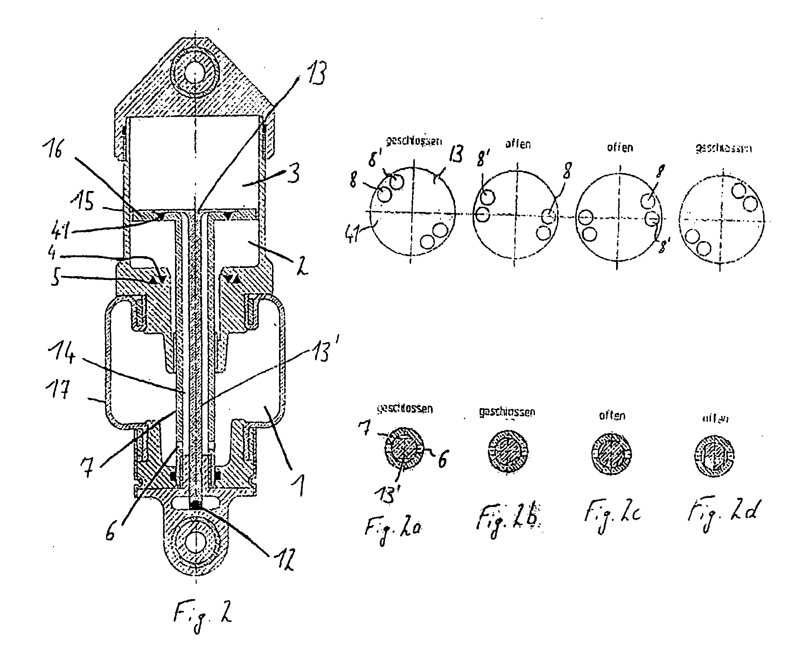

Eine alternative Ausgestaltung der Erfindung ist in der Figur 2 dargestellt, in der in Querschnittsansicht eine Luftfeder bzw. eine Gasfeder-Dämpfereinheit mit ebenfalls drei Luftfederräumen 1, 2, 3 gezeigt ist. Auch hier ist der Trennkolben 16 in einem Gehäuse 15 geführt und an einer hohlen Kolbenstange 7 angeordnet, in der eine Bohrung 6 ausgebildet ist, um die Luftfederräume 1, 3 miteinander zu verbinden. Die Drosseln 4, 5, zum gesteuerten Überströmen komprimierter Luft zwischen dem ersten Luftfederraum 1 und dem zweiten Luftfederraum 2 sind in der Ausführungsform gemäß der Figur 2 in dem Gehäuse 15 angeordnet. In dem Verbindungskanal 14 der hohlen Kolbenstange 7 ist eine Drosseleinrichtung 13 angeordnet, die über eine Betätigungseinrichtung 12, beispielsweise einen Hebel, drehbar betätigt werden kann. Die Drosseleinrichtung 13 weist verschiedene Bohrungen 8, 8' auf, die in den Figuren 2a und 2b in der oberen Darstellung in Draufsicht gezeigt sind. Diese Bohrungen 8, 8' können mit einer Bohrung 41 oder einer Drosselstelle 41, die in dem Trennkolben 16 ausgebildet ist, vollständig oder teilweise in Überdeckung gebracht werden und so eine Verbindung zwischen dem zweiten Luftfederraum 2 und dem dritten Luftfederraum 3 herstellen.

Der Schaft 13' der Drosseleinrichtung 13 ist in der unteren Darstellung der Figuren 2a - 2d gezeigt und weist einen mit Abflachungen versehenen, im wesentlichen runden Querschnitt auf, wobei der Querschnitt so ausgebildet ist, dass die Bohrung 6 in der Kolbenstange 7 wahlweise geschlossen oder offen ist. Durch Verdrehen der Drosseleinrichtung 13 über die Betätigungseinrichtung 12 ist es möglich, verschiedene Verbindungen zwischen den Luftfederräumen 1, 2, 3 herzustellen und somit verschieden große Federsteifigkeiten des Gesamtsystems einzustellen. In der Figur 2a ist eine erste Stellung gezeigt, bei der sowohl die Drossel oder Bohrung 41 als auch die Bohrung 6 verschlossen sind. Ein Luftaustausch zwischen dem ersten Luftfederraum 1 und dem dritten Luftfederraum 3 findet nicht statt, ein Druckausgleich kann nur über die in dem Gehäuse 15 angeordnete Drossel 4 erfolgen.

In der Figur 2b ist die Bohrung 6 in der Kolbenstange 7 verschlossen, aufgrund der vollständigen Überdeckung der Bohrung 8 und der Drossel 41 ist eine Verbindung zwischen dem zweiten Luftfederraum 2 und dem dritten Luftfederraum 3 hergestellt, was eine verringerte Dämpfung und eine weichere Federcharakteristik zur Folge hat. In der Figur 2c ist die Einstellung mit der geringsten Dämpferwirkung gezeigt, bei der eine Verbindung zwischen dem zweiten Luftfederraum und dem dritten Luftfederraum über die Bohrung 41 und die Bohrung 8' möglich ist, gleichzeitig kann über die offene Bohrung 6 ein Austausch zwischen dem ersten Luftfederraum 1 und dem dritten Luftfederraum 3 erfolgen.

Die Figur 2d zeigt eine geöffnete Verbindung zwischen dem ersten Luftfederraum 1 und dem dritten Luftfederraum 3 über den Verbindungskanal 14 und die offene Bohrung 6 in der Kolbenstange 7. Eine Verbindung zwischen dem zweiten Luftfederraum 2 und den beiden anderen Luftfederräumen 1, 3 über die Drosseleinrichtung 13 ist gesperrt.

Mit der pneumatischen Drosseleinrichtung 13 können in der dargestellten Ausführungsform vier Stellungen und Verbindungen der Luftfederräume 1, 2, 3 hergestellt oder gesperrt werden. Ein Verschließen sämtlicher Drosseln 4, 5, 41 führt zu größeren Federsteifigkeiten des Gesamtsystems, was ungewollte Federbewegungen einschränkt.

Ein Anwendungsbeispiel für eine solche Gasfeder ist ein gefedertes Fahrrad. Eine Anpassung an die Bedürfnisse des Fahrers wird erreicht, indem verschiedene Luftfederräume 1, 2, 3 durch Drosseln 4, 5 41, 13 voneinander getrennt werden. Auch die Gasfeder-Dämpfereinheit gemäß der Figur 2 kann stufenlos über die Betätigungseinrichtung 12, zum Beispiel ein Hebel oder ein Handrad, stufenlos verstellt werden. Die pneumatische Sperrfunktion bietet den Vorteil, dass Federbewegungen nicht völlig verhindert werden, sondern dass bei größeren Hindernissen noch gefedert wird und der Bodenkontakt, beispielsweise eines Hinterrades, weiterhin bestehen bleibt, um Brems- oder Antriebskräfte zu übertragen.

## Patentansprüche

1. Luftfeder mit einem ersten Luftfederraum (1), einem zweiten Luftfederraum (2) und einem dritten Luftfederraum (3) mit veränderlichen Volumina, wobei die Volumina des ersten und des dritten Luftfederraumes (1,3) zu dem Volumina des zweiten Luftfederraumes (2) entgegengesetzt vergrößert und verkleinert werden, und wobei der zweite und der dritte Luftfederraum (2,3) von einem Trennkolben (16) getrennt werden, in dem zwei Drosseln (4,5) angeordnet sind, die ein begrenztes Überströmen von Luft aus dem dritten Luftfederraum (3) in den zweiten Luftfederraum (2) ermöglichen und umgekehrt, **dadurch gekennzeichnet**, zwischen dem ersten Luftfederraum (1) und dem zweiten Luftfederraum (2) ein Verbindungskanal (14) besteht, über den komprimierte Luft aus einem sich verkleinernden Luftfederraum (1 bzw. 2) in einen sich vergrößernden Luftfederraum (2 bzw. 1) geleitet wird, und in dem eine Drosseleinrichtung (13) angeordnet ist, die bezüglich des Durchlasses verstellbar und sperrbar ausgebildet ist.

2. Luftfeder nach Anspruch 1, **dadurch gekennzeichnet, dass** der Trennkolben (16) mit einer hohlen Kolbstange (7) verbunden ist, welche eine Verbindung (6) zum Luftaustausch zwischen dem ersten Luftfederraum (1) und dem dritten Luftfederraum (3) herstellt.

3. Luftfeder nach Anspruch 1 oder 2, **dadurch gekennzeichnet, dass** die Drosseleinrichtung (13) mit einer Betätigungseinrichtung (12) gekoppelt ist, die von außen zugänglich an der Luftfeder angeordnet ist.

4. Luftfeder nach Anspruch 3, **dadurch gekennzeichnet, dass** der Betätigungseinrichtung (12) Rastelemente zugeordnet sind, die die Drosseleinrichtung (13) in vorbestimmten Stellungen festlegen.

5. Luftfeder nach Anspruch 4, **dadurch gekennzeichnet, dass** die Rastelemente an zueinander verdrehbaren Kulissenscheiben (9, 10) ausgebildet sind und eine Kulissenscheibe (9) dem Verbindungskanal (14) zugeordnet und durch die komprimierte Luft mit einer Kraft in Richtung auf die zweite Kulissenscheibe (10) belastet ist.

6. Luftfeder nach einem der voranstehenden Ansprüche, **dadurch gekennzeichnet, dass** in der Drosseleinrichtung (13) zumindest eine Durchlaßbohrung (8, 8') ausgebildet ist, die in den Verbindungskanal (14) ein- und herausführbar ist.

7. Luftfeder nach Anspruch 6, **dadurch gekennzeichnet, dass** die Drosseleinrichtung (13) drehbar gelagert ist und die Durchlaßbohrung (8, 8') in den Verbindungskanal (14) einschwenkbar ist.

8. Luftfeder nach einem der Ansprüche 1 bis 5, **dadurch gekennzeichnet, dass** die Drosseleinrichtung als ein Nadelventil, insbesondere als ein stufenlos einstellbares Nadelventil, ausgebildet ist.

9. Luftfeder nach einem der voranstehenden Ansprüche, **dadurch gekennzeichnet**, die Drosseleinrichtung (13) in der Kolbenstange (7) angeordnet ist.

10. Luftfeder nach einem der voranstehenden Ansprüche, **dadurch gekennzeichnet, dass** die Drosseleinrichtung (13) in einer Verbindung zwischen dem ersten Luftfederraum (1) und dem dritten Luftfederraum (3) angeordnet ist.

## Claims

1. Air spring having a first air spring space (1), a second air spring space (2) and a third air spring space (3) having variable volumes, the volumes of the first and the third air spring spaces (1, 3) being increased and decreased in an opposed manner with respect to the volume of the second air spring space (2), and the second and the third air spring spaces (2, 3) being separated by a separating piston (16), in which two restrictors (4, 5) are arranged which make a limited crossflow of air out of the third air spring space (3) into the second air spring space (2) possible and vice versa, **characterized in that** there is a connecting channel (14) between the first air spring space (1) and the second air spring space (2), via which connecting channel (14) compressed air is guided from a decreasing air spring space (1 or 2) into an increasing air spring space (2 or 1), and in which a restrictor device (13) which can be adjusted with regard to the throughflow and is configured such that it can be shut off is arranged.

2. Air spring according to Claim 1, **characterized in that** the separating piston (16) is connected to a hollow piston rod (7) which produces a connection (6) for the exchange of air between the first air spring space (1) and the third air spring space (3).

3. Air spring according to Claim 1 or 2, **characterized in that** the restrictor device (13) is coupled to an actuating device (12) which is arranged on the air spring so as to be accessible from the outside.

4. Air spring according to Claim 3, **characterized in that** the actuating device (12) is assigned latching elements which fix the restrictor device (13) in predefined positions.

5. Air spring according to Claim 4, **characterized in that** the latching elements are formed on slotted guide disks (9, 10) which can be rotated with respect to one another, and a slotted guide disk is assigned to the connecting channel (14), by way of which slotted guide disk (9) compressed air is loaded with a force in the direction of the second slotted guide disk (10).

6. Air spring according to one of the preceding claims, **characterized in that** at least one throughflow hole (8, 8') which can be guided into and out of the connecting channel (14) is formed in the restrictor device (13).

7. Air spring according to Claim 6, **characterized in that** the restrictor device (13) is mounted rotatably and the throughflow hole (8, 8') can be pivoted into the connecting channel (14).

8. Air spring according to one of Claims 1 to 5, **characterized in that** the restrictor device is configured as a needle valve, in particular as an infinitely adjustable needle valve.

9. Air spring according to one of the preceding claims, **characterized in that** the restrictor device (13) is arranged in the piston rod (7).

10. Air spring according to one of the preceding claims, **characterized in that** the restrictor device (13) is arranged in a connection between the first air spring space (1) and the third air spring space (3).

## Revendications

1. Ressort pneumatique comprenant un premier espace de ressort pneumatique (1), un deuxième espace de ressort pneumatique (2) et un troisième espace de ressort pneumatique (3) de volumes variables, les volumes des premier et troisième espaces de ressort pneumatique (1, 3) étant augmentés et diminués à l'inverse du volume du deuxième espace de ressort pneumatique (2), et les deuxième et troisième espaces de ressort pneumatique (2, 3) étant séparés par un piston de séparation (16) dans lequel sont disposés deux étranglements (4, 5), qui permettent un échappement limité d'air hors du troisième espace de ressort pneumatique (3) jusque dans le deuxième espace de ressort pneumatique (2) et inversement, **caractérisé en ce qu'**entre le premier espace de ressort pneumatique (1) et le deuxième espace de ressort pneumatique (2) existe un canal de liaison (14) par le biais duquel de l'air comprimé provenant d'un espace de ressort pneumatique de volume décroissant (1 ou 2) est conduit dans un espace de ressort pneumatique de volume croissant (2 ou 1), et dans lequel est disposé un dispositif d'étranglement (13) qui est réalisé de manière réglable et blocable en fonction du passage.

2. Ressort pneumatique selon la revendication 1, **caractérisé en ce que** le piston de séparation (16) est raccordé à une tige de piston creuse (7) qui établit une liaison (6) en vue de l'échange d'air entre le premier espace de ressort pneumatique (1) et le troisième espace de ressort pneumatique (3).

3. Ressort pneumatique selon la revendication 1 ou 2, **caractérisé en ce que** le dispositif d'étranglement (13) est accouplé à un dispositif d'actionnement (12) qui est disposé sur le ressort pneumatique de manière accessible depuis l'extérieur.

4. Ressort pneumatique selon la revendication 3, **caractérisé en ce qu'**au dispositif d'actionnement (12) sont associés des éléments d'encliquetage qui fixent le dispositif d'étranglement (13) dans des positions prédéterminées.

5. Ressort pneumatique selon la revendication 4, **caractérisé en ce que** les éléments d'encliquetage sont réalisés sur des disques coulissant (9, 10) pouvant tourner les uns par rapport aux autres, et un disque coulissant (9) est associe au canal de liaison (14) et est sollicité par l'air comprimé par une force dans la direction du deuxième disque coulissant (10).

6. Ressort pneumatique selon l'une quelconque des revendications précédentes, **caractérisé en ce qu'**au moins un alésage traversant (8, 8') est réalisé dans le dispositif d'étranglement (13), lequel peut être entré dans le canal de liaison (14) et ressorti de celui-ci.

7. Ressort pneumatique selon la revendication 6, **caractérisé en ce que** le dispositif d'étranglement (13) est monté de manière rotative et l'alésage traversant (8, 8') peut être pivoté dans le canal de liaison (14).

8. Ressort pneumatique selon l'une quelconque des revendications 1 à 5, **caractérisé en ce que** le dispositif d'étranglement est réalisé sous forme de soupape à pointeau, en particulier sous forme de soupape à pointeau ajustable de manière continue.

9. Ressort pneumatique selon l'une quelconque des revendications précédentes, **caractérisé en ce que** le dispositif d'étranglement (13) est disposé dans la tige de piston (7).

10. Ressort pneumatique selon l'une quelconque des revendications précédentes, **caractérisé en ce que** le dispositif d'étranglement (13) est disposé dans une liaison entre le premier espace de ressort pneumatique (1) et le troisième espace de ressort pneumatique (3).
